# EUROPEAN PATENT SPECIFICATION

(11) **EP 0 754 609 B1**
(45) Date of publication and mention of the grant of the patent: **23.05.2001**
(21) Application number: 96304933.3
(22) Date of filing: 04.07.1996
(51) Int. Cl.: B60T 8/34

(54) **Anti-skid brake system for a self steer trailer**
Antischlupf-Bremssystem für einen selbstlenkenden Sattelanhänger
Système de freinage anti-patinage pour une remorque comportant au moins un essieu auto-directeur

(30) Priority: 15.07.1995 GB 9514508
(43) Date of publication of application: 22.01.1997
(73) Proprietor: HALDEX BRAKE PRODUCTS LIMITED, Redditch Worcestershire B98 9HA (GB)
(72) Inventor: Ross, Colin Ford, Kidderminster, Worcestershire DY10 4RT (GB); Jones, Philip Edwin, Birmingham B43 6PS (GB)
(74) Representative: Leach, John Nigel

(56) References cited:
- EP-A- 0 559 151
- GB-A- 1 598 037
- ATZ AUTOMOBILTECHNISCHE ZEITSCHRIFT, vol. 83, no. 9, September 1981, SCHWÄBISCH-GMÜND, DE, pages 439-446, XP002032979 MISCHKE: "Aufbau und Wirkung des Antiblockiersystems ABS für Nutzfahrzeuge"
- GRAUBREMSE Nachrichten und Informationen aus der Brems- und Steuerungstechnik für Kunden und Freunde der GRAUBREMSE GmbH Heidelberg AUSGABE IAA - 1987 XP002032980

## Description

### Description of Invention

This invention relates to an anti-skid (ABS) brake system for a self steer trailer vehicle. A self steer trailer vehicle is a trailer vehicle having two or more wheel carrying axles, at least one axle having self-steer means whereby when the vehicle is cornering reaction forces between the ground and the wheels carried by the axle causes pivotal movement of the wheels about a steering axis. Such a self-steer means aids cornering of the vehicle and reduces tyre scrub.

The axles may be rigid beam axles carrying at least one wheel at each end or may comprise any part or parts of the trailer vehicle whereby wheels are supported on opposite sides of the vehicle.

In a trailer not provided with self-steer facility it is possible, for anti-skid purposes, to modulate brake pressure to the wheels of the rearmost axle by the use of a separate modulator for the wheels on opposite sides of the vehicle under the control of a speed sensor for a wheel on the associated side of the vehicle. Such an arrangement, however, presents problems with a self-steer axle vehicle due to differing braking torques being applied to the wheels of the self-steer axle, which would cause steering movement of the wheels to occur even when the vehicle is travelling in a straight line, which is obviously unacceptable.

To overcome this problem there have been a number of prior proposals.

One proposal is to provide two sensors, one for a wheel at opposite sides of an axle, typically the middle axle of a three axle vehicle, and a single modulator for all the braked wheels of the trailer. This avoids the problem of differential braking with a self-steer axle.

Another option is to provide four sensors and three modulators (4S/3M). In this option a sensor is provided for the wheels on opposite ends of the self-steering axle and of another axle of the vehicle, typically the middle axle. The other axle of the vehicle has a separate modulator for each wheel thereof controlled by a sensor for the same wheel. The self-steering axle has, however, only a single modulator which is controlled in response to the signals from the sensors associated with the wheels of the self-steer axle but the control regime is on a "select low" basis. That is to say the sensor which detects that its associated wheel is on a surface of lower friction controls the modulator.

Whilst this option avoids the problem of differential braking across the self-steer axle, since the same braking pressure is applied to both wheels because a single common modulator is used, it requires the provision of four sensors and associated wiring, and hence is relatively expensive.

A third option relies on providing two sensors for a non-steering axle of the trailer, typically the middle axle, and two associated modulators which control the wheels of said non-steering axle. The outputs from the modulators are fed to a "select low" valve which mechanically selects between the brake pressures outputted by the two modulators and feeds a single brake signal, on a select low basis, as a control signal to a relay valve which controls the supply of brake pressure from a reservoir to the wheels of the self-steer axle. Again a common brake pressure is applied to both wheels at opposite ends of the self-steer axle. Such an option is disclosed in 'Aufbau und Wirkung des Antiblockiersystems ABS für Nutzfahrzeuge' ATZ Automobiltechnische Zeitshrift, vol 83, no. 9, Sept 1981.

This option is also relatively expensive since it needs the provision of a select low valve which is a relatively low volume production item and hence relatively expensive, as well as an additional relay valve, such a relay valve being necessary to meet system response time requirements.

An object of the present invention is to provide an anti-skid brake system on a self-steer trailer vehicle whereby the above mentioned disadvantages are overcome or are reduced.

According to the present invention we provide an anti-skid brake system for a trailer vehicle having two or more wheel carrying axles, at least one axle having self-steer means whereby when the vehicle is cornering, reaction forces between the ground and the wheels carried by the axle causes pivotal movement of the wheels about a steering axis, said system comprising a first wheel, at one end of the non-steer axle, provided with a first brake pressure responsive brake, a first brake pressure modulator to supply brake pressure to said first brake and a first speed sensor for sensing the speed of rotation of said first wheel to provide a control signal for said first brake pressure modulator, a second wheel at the opposite end of the non-steer axle provided with a second brake pressure responsive brake, a second brake pressure modulator to supply brake pressure to said second brake and a second speed sensor for sensing the speed of rotation of the second wheel to provide a control signal for said second brake pressure modulator whereby modulation of said brake pressure supplied to the brakes of said first and second wheels at opposite ends of the non-steer axle is provided and a brake for wheels at opposite ends of the self-steer axle, each of said brakes being responsive to fluid brake pressure characterised in that a common brake pressure modulator being provided to supply brake pressure to said brakes for said wheels at opposite ends of said self-steer axle, said modulator being operable in response to signals provided by wheel speed sensors for sensing the speed of rotation of wheels at opposite ends of said non-steer axle of the trailer vehicle, the brake pressure supplied to said brakes for said wheels at the opposite ends of said self-steer axle being controlled solely by said common brake pressure modulator, wherein there is no pneumatic connection between said first brake pressure modulator and said common brake pressure modulator, and between said second brake pressure modulator and said common brake pressure modulator.

Thus, a modulator dedicated for the brakes of the wheels at opposite ends of self-steer axle is operable in response to the speed of wheels which are not on the self-steer axle, whereby the above mentioned problems are overcome or are reduced.

The brake system may comprise a control unit responsive to signals from said first and second speed sensors to provide a control signal for said common modulator in accordance with a predetermined control regime.

Said control signal for the common modulator is generated by said control unit
a) by selecting one of said first and second wheels as a controlling wheel, and
b) generating said control signal in dependence upon the speed of rotation of said controlling wheel.

The control unit may comprise computing means and means for starting anti-skid reduction of brake pressure, said computing means including sequencing means to determine and initially select as said controlling wheel the first of said first and second wheels to encounter an incipient skid condition.

Said computing means may include comparator means to compare the accelerations of said first and second wheels during wheel acceleration phase of the or each anti-skid cycle subsequent to starting anti-skid reduction of said brake pressure and being arranged to maintain said initially selected wheel or to select the other wheel as the controlling wheel if said accelerations are indicative of engagement of the first and second wheels with surfaces of similar friction and to select the wheel engaged with the lower friction surface as the controlling wheel if the wheels are engaged with surfaces of different friction.

An embodiment of the invention will now be described by way of example with reference to the accompanying drawings, wherein:
FIGURE 1 is a digrammatic illustration of a trailer vehicle embodying the invention;
FIGURES 2 and 3 are timing charts for explaining anti-lock control performed in the system of Figure 1; and
FIGURES 4 and 5 are flow charts illustrating the operation of the system of Figure 1.

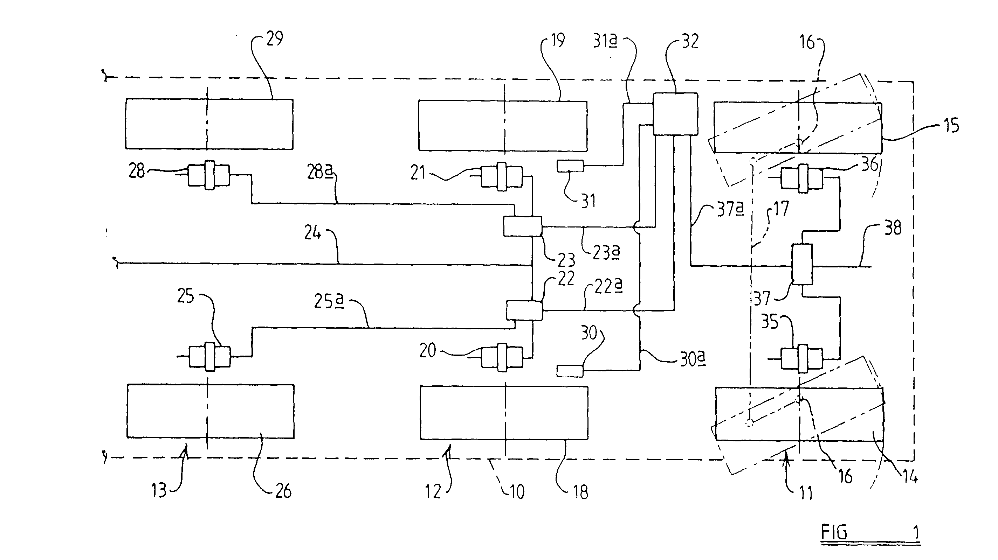

Referring now to Figure 1 there is shown a trailer vehicle 10 having three wheel carrying axles of which the rear axle is a conventional self-steer axle 11 and two further, non-steering axles 12 and 13 provide the middle and front axles respectively. The trailer is provided with a conventional hitch, not shown, for connection to a tractor vehicle.

The self-steer axle 11 has wheels 14, 15 at opposite sides of the trailer at opposite ends of the axle and the wheels 14, 15 are each pivotable about a generally vertical steering axis 16 as a result of steering torque applied to the wheels by reaction with the road surface when the vehicle is cornering. The wheels 14, 15 are interconnected by a track rod 17, again in conventional manner.

The middle axle 12 has first and second wheels 18, 19 carried at opposite ends of the axle and disposed on opposite sides of the vehicle.

The first wheel 18 has a conventional first brake actuator 20 by which the vehicle brakes can be applied by feeding brake pressure, in the present example air pressure, to the brake actuator 20. The second wheel 19 has a similar second brake actuator 21. For anti-skid purposes, brake pressure supplied to the first brake actuator 20 is controlled by a first brake pressure modulator 22 whilst the brake pressure supplied to the second actuator 21 is controlled by a second modulator 23. Control air is fed to the modulators 22, 23 on a line 24 which is coupled, by a disconnectable coupling to a control line of the tractor vehicle, not shown, which is itself supplied with control air under driver control in known manner. Generally a branch line 25a extends from the modulator 22 to a brake actuator 25 associated with one wheel 26 carried by the front axle 13 whilst a similar branch line 28a extends from the modulator 23 to an actuator 28 for a wheel 29 provided at the opposite end of the front axle 13.

The first and second wheels 18 and 19 are provided with a conventional first and second speed sensor 30, 31 respectively which are adapted to sense the speed of rotation of the associated wheel 18, 19 respectively.

The first and second speed sensors 30, 31 are connected by lines 30a, 31a respectively to an electronic control unit 32. Mutually independent control signals for the modulators 22, 23 are supplied from the electronic control unit 22 on lines 22a, 23a respectively.

The wheel 14 of the self-steer axle 11 is provided with a brake actuator 35 whilst the wheel 15 of the rear axle 11 is provided with a similar brake actuator 36. The brake pressure supplied to the actuators 35, 36 is controlled by a common brake pressure modulator 37 to which control pressure is fed by line 38 which is connected in circuit with the line 24. A control signal for the modulator 37 is fed thereto from the control unit 32 on line 37a.

The electronic control unit 32 comprises a micro-computor which, in the present example, on a single chip, provides a central processor unit (CPU) connected by an address bus and a data bus to a random access memory (RAM) serving as a working store and a programmable read only memory (PROM) serving as a store for an operating programmable system together with input and output ports for input and output of signals. If desired these features of the electronic controller 35 may be realised in any other suitable manner.

The PROM is programmed with an algorithm which provides a means to control the brake system of the present invention and to provide conventional ABS control. The algorithm, in conventional manner, monitors the speed of rotation in accordance with data provided by the sensors 30, 31 and the CPU calculates, in accordance with conventional criteria, which of the wheels 18, 19 first tends to lock. The CPU then flags the data received from the associated sensor as being data from an initially selected wheel so that the control signal supplied on line 37a to the common modulator 37 is generated in accordance with data supplied from the thus initially selected wheel.

In a first brake pressure release or wheel acceleration phase of the anti-skid cycle the wheel speeds increase and the CPU compares the rate of acceleration of the wheels. When the rates of acceleration are the same or similar within predetermined limits the CPU may select either wheel as the controlling wheel but it is preferred that the CPU is programmed to keep control with the initially selected wheel in such conditions.

Alternatively, if during the acceleration phase the speeds of acceleration are determined as being different, then the CPU selects the wheel with lowest acceleration (select low) as the controlling wheel and the control signal supplied to the modulator 37 on line 37a is generated in accordance with data provided from the sensor of the thus selected wheel.

When the control unit again increases brake pressure, at the start of a second ABS cycle there again occurs a tendency for wheel skid to occur and the algorithm causes the brake pressure at the wheels again to be dropped in accordance with signals provided by the sensors 30, 31. Again, the rates of acceleration during a second acceleration phase are determined and compared and, if they are similar, control by either wheel may be selected but preferably control by the initially selected wheel is maintained whereas if they are different control is donated to the select low wheel, i.e. the wheel with the lowest acceleration. This procedure is repeated for the acceleration phase of subsequent anti-skid cycles during a particular driver demand phase.

Of course, when the driver ceases brake demand, the system is reset ready for operation as described hereinbefore upon a subsequent driver application of the brakes.

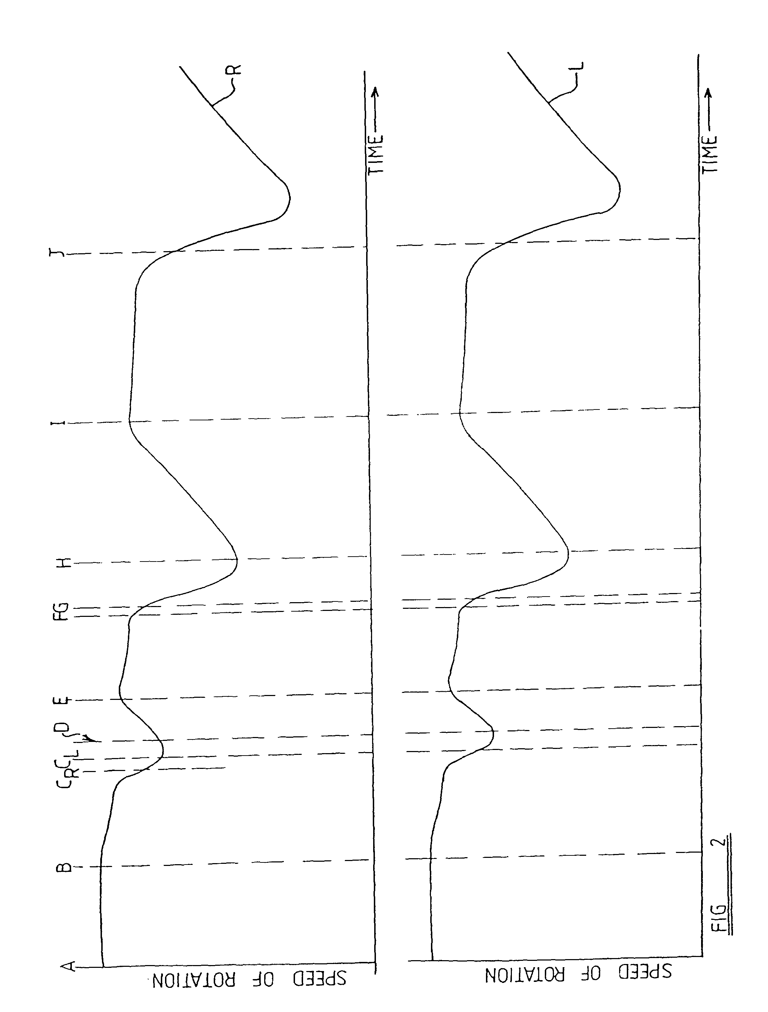

Figure 2 illustrates an example of the invention where the vehicle is braked in conditions where the first and second wheels 18 and 19 are engaged with surfaces of the same or similar friction. By similar friction we mean surfaces on which the co-efficients of friction are similar within a predetermined range (homogeneous friction) and is contrasted with situations to be described hereinafter where the wheels are engaged with surfaces having co-efficients of friction which differ by more than said predetermined range (split friction).

In Figure 2 line R is a plot of the speed of rotation of the right-hand wheel 19 against time whilst the L is a plot of the speed of rotation of the left-hand wheel 18 against time.

In the range A-B initially both wheels 18 and 19 are rotating at the same speed. The driver then applies the brakes and the wheels start to slow. At point C_{R} the deceleration behaviour of the wheel 19 is such that conditions programmed into the CPU initiate anti-skid brake operation. A similar condition occurs at C_{L} for the wheel 18 but is slightly after point C_{R}. Although the co-efficients of friction of the surfaces with which wheels 18 and 19 are engaged are the same or substantially the same, in practice one wheel usually triggers anti-skid brake operation slightly before the other. In the present example it is the wheel 19 which is the first. This is flagged by the CPU and thus wheel 19 is flagged as the initially selected wheel.

In the event of both wheels qualifying for anti-skid control simultaneously it is immaterial as to which is the controlling wheel for the self-steer axle (or axles). For example, the CPU may be programmed to select the right-hand wheel 19 as the controlling wheel but equally the CPU could be programmed to select the left-hand wheel 18. Alternatively, any other suitable selection basis may be used, for example, the last controlling wheel may be selected.

In conventional manner the modulators 22, 23 then drop the brake pressure supplied to the actuators 20, 21 and although the wheel speed continues to fall initially, the speed then starts to increase during a recovery or acceleration phase as indicated in the region D-E.

The brake pressure is increased stepwise during this phase so that wheels again become braked causing the wheels to decelerate as indicated in the regions E-F and then to skid and start a second anti-skid cycle at G.

During the period C_{R} to E the common modulator 37 is supplied with a control signal on line 37a which is generated by the CPU in accordance with wheel speed information supplied to the CPU by the sensor 31 of the wheel 19 which was initially flagged as being the first wheel to enter an incipient skid condition.

Because the wheels are engaged with a surface having a homogeneous co-efficients of friction, acceleration of the wheels in the region D-E is detected as being similar within predetermined limits and the CPU is programmed under those conditions to maintain the wheel 19 as the controlling wheel, i.e. the wheel which controls the generation, by the CPU, of the control signal for the common modulator 37, during anti-skid operation in the regions E-I.

Acceleration in the region H-I is similarly compared and so the wheel 19 is again maintained as the controlling wheel in the next anti-skid cycle which begins at J and in subsequent cycles of the anti-skid operation.

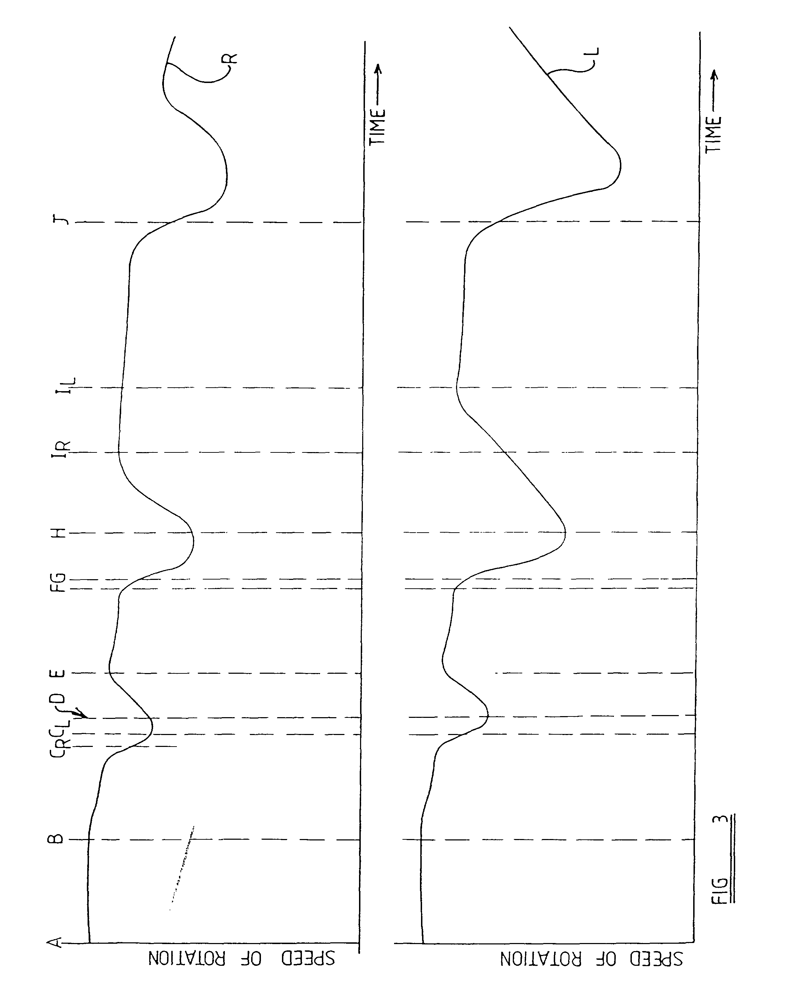

Referring now to Figure 3 this illustrates the situation where the trailer is originally operating on a homogeneous surface the same as illustrated in Figure 2 and then changes to a split friction surface after point E.

Because in the regions A-E the vehicle is on a homogeneous surface the wheel 19 is the controlling wheel in the regions A-I.

However, since subsequent to point E the wheel 18 has now moved on to a surface of lower co-efficient of friction than the surface with which the wheel 19 is engaged, its rate of acceleration in the region H-I is lower than that of the wheel 19 and this is determined by the CPU and causes the CPU to select the wheel 18 as the controlling wheel, for the next anti-skid cycle starting at J.

The controlling wheel for subsequent cycles depends upon the relative rates of acceleration of the wheels in the respective acceleration phase and so control may be maintained with the wheel 18 if it continues to be the lower friction surface or if the vehicle again moves on to a homogeneous surface, although in that circumstance the CPU could be programmed to change to the wheel 19. Alternatively, if the wheel 19 becomes engaged with a lower friction surface then the wheel 19 will become the controlling wheel.

In the event that the co-efficients of friction are so different that for a particular brake demand one of the co-efficients of friction is so high that one of the wheels does not slow to an extent as to initiate anti-skid brake operation, the wheel which is subject to anti-skid modulation is regarded as the select low wheel and hence the controlling wheel.

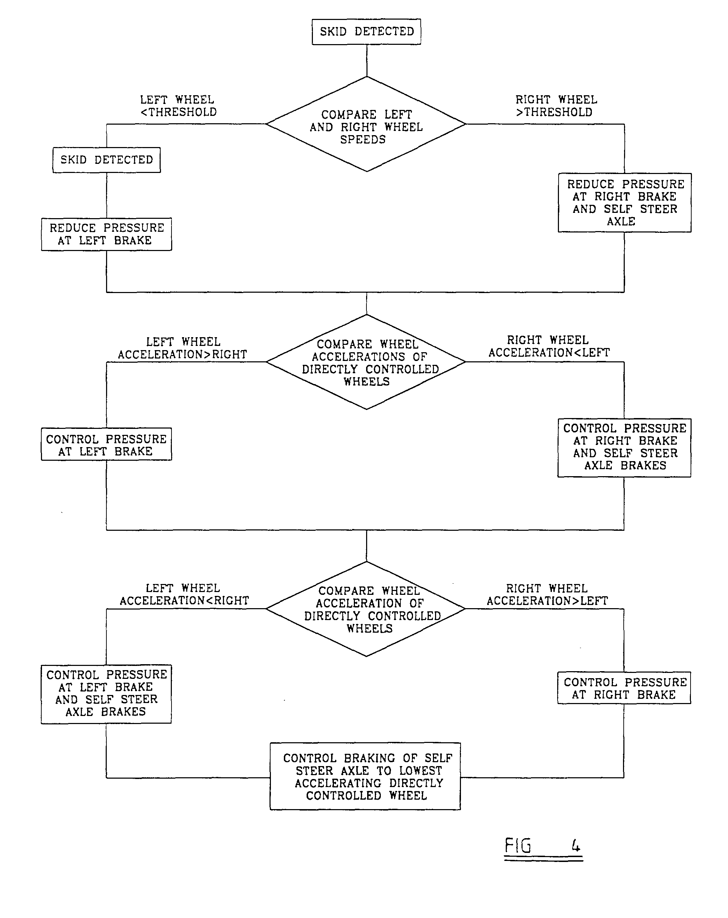

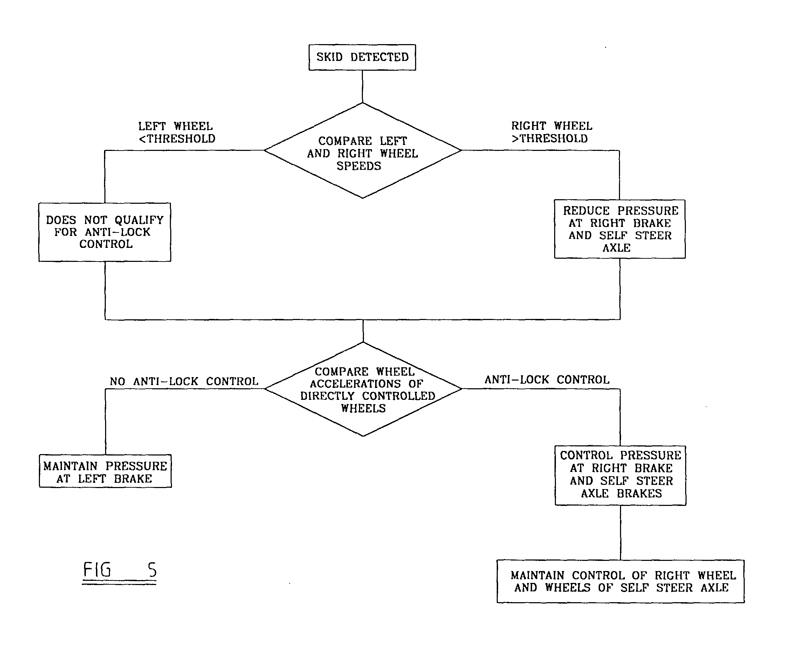

Figure 4 is a flow diagram illustrating operation of the system of Figure 1 where both of the wheels of the non-steer, axle which are directly controlled in response to signals from sensors associated with the "non-steer" wheels are under anti-lock control and Figure 5 is a flow diagram illustrating another example of operation of the system of Figure 1 where only the directly controlled wheel on one side of the tractor requests anti-lock control.

The features disclosed in the foregoing description, or the accompanying drawings, expressed in their specific forms or in terms of a means for performing the disclosed function, or a method or process for attaining the disclosed result, or a class or group of substances or compositions, as appropriate, may, separately or in any combination of such features, be utilised for realising the invention in diverse forms thereof.

## Claims

1. An anti-skid brake system for a trailer vehicle having two or more wheel carrying axles (11, 12, 13), at least one axle (11) having self-steer means whereby when the vehicle is cornering, reaction forces between the ground and the wheels carried by the axle causes pivotal movement of the wheels about a steering axis, said system comprising a first wheel (18), at one end of the non-steer axle (12), provided with a first brake pressure responsive brake, a first brake pressure modulator (22) to supply brake pressure to said first brake and a first speed sensor (30) for sensing the speed of rotation of said first wheel (18) to provide a control signal for said first brake pressure modulator (22), a second wheel (19) at the opposite end of the non-steer axle (12) provided with a second brake pressure responsive brake; a second brake pressure modulator (23) to supply brake pressure to said second brake and a second speed sensor (31) for sensing the speed of rotation of the second wheel (19) to provide a control signal for said second brake pressure modulator (23) whereby modulation of said brake pressure supplied to the brakes of said first and second wheels at opposite ends of the non-steer axle (12) is provided and a brake for wheels at opposite ends of the self-steer axle (11), each of said brakes being responsive to fluid brake pressure characterised in that a common brake pressure modulator (37) is provided to supply brake pressure to said brakes for said wheels (14, 15) at opposite ends of said self-steer axle (11), said modulator being operable in response to signals provided by wheel speed sensors (30, 31) for sensing the speed of rotation of wheels at opposite ends of said non-steer axle (12) of the trailer vehicle, the brake pressure supplied to said brakes for said wheels at the opposite ends of said self-steer axle (11) being controlled solely by said common brake pressure modulator (37), wherein there is no fluid flow between said first brake pressure modulator (22) and said common brake pressure modulator (37), and between said second brake pressure modulator (23) and said common brake pressure modulator (37).

2. A system according to claim 1 wherein the brake system comprises a control unit (32) responsive to signals from said first and second speed sensors (30, 31) to provide a control signal for said common modulator (37) in accordance with a predetermined control regime.

3. A system according to claim 2 wherein said control signal for the common modulator (37) is generated by said control unit
a) by selecting one of said first and second wheels as a controlling wheel, and
b) generating said control signal in dependence upon the speed of rotation of said controlling wheel.

4. A system according to claim 3 wherein the control unit comprises computing means and means for starting anti-skid reduction of brake pressure, said computing means including sequencing means to determine and initially select as said controlling wheel the first of said first and second wheels to encounter an incipient skid condition.

5. A system according to claim 4 wherein said computing means includes comparator means to compare the accelerations of said first and second wheels during a wheel acceleration phase of the or each anti-skid cycle subsequent to starting anti-skid reduction of said brake pressure and being arranged to maintain said initially selected wheel or to select the other wheel as the controlling wheel if said accelerations are indicative of engagement of the first and second wheels with surfaces of similar friction and to select the wheel engaged with the lower friction surface as the controlling wheel if the wheels are engaged with surfaces of different friction.

## Patentansprüche

1. Antiblockiersystem für ein Anhängerfahrzeug mit zwei oder mehreren radtragenden Achsen (11, 12, 13), wobei wenigstens eine Achse (11) Selbstlenkmittel aufweist, wodurch Reaktionskräfte zwischen dem Untergrund und den auf der Achse angeordneten Rädern eine Drehbewegung der Räder um eine Lenkachse verursachen, wenn das Fahrzeug abbiegt, das System aufweisend: ein erstes Rad (18) an einem Ende der ungelenkten Achse (12), wobei das erste Rad (18) eine erste, auf einen Bremsdruck reagierende Bremse aufweist; einen ersten Bremsdruckmodulator (22) zum Zuführen eines Bremsdrucks zu der ersten Bremse und einem ersten Geschwindigkeitssensor (30) zum Erfassen der Drehgeschwindigkeit des ersten Rads (18), um ein Steuersignal für den ersten Bremsdruckmodulator (23) zu liefern; ein zweites Rad (19) an einem entgegengesetzten Ende der ungelenkten Achse (12), wobei das zweite Rad (19) eine zweite, auf einen Bremsdruck reagierende Bremse aufweist; einen zweiten Bremsdruckmodulator (23) zum Zuführen eines Bremsdrucks zu der zweiten Bremse und einem zweiten Geschwindigkeitssensor (31) zum Erfassen der Drehgeschwindigkeit des zweiten Rads (19), um ein Steuersignal für den zweiten Bremsdruckmodulator (23) zu liefern, wodurch eine Modulation des zu den Bremsen des ersten und des zweiten Rads an den entgegengesetzten Enden der ungelenkten Achse (12) gelieferten Bremsdrucks erreicht wird; und eine Bremse für die Räder an den entgegengesetzten Enden der selbstlenkenden Achse (11), wobei jede der Bremsen auf einen Flüssigkeitsbremsdruck reagiert, dadurch **gekennzeichnet,** daß ein gemeinsamer Bremsdruckmodulator (37) vorgesehen ist, um einen Bremsdruck für die Bremsen der Räder (14, 15) an entgegengesetzten Enden der selbstlenkenden Achse (11) zu liefern, wobei der Modulator in Reaktion zu den mittels der Radgeschwindigkeitssensoren (30, 31) zum Erfassen der Drehgeschwindigkeit der Räder an den entgegengesetzten Enden der ungelenkten Achse (12) des Anhängerfahrzeugs gelieferten Signale betreibbar ist, wobei der zu den Bremsen der Räder an den entgegengesetzten Enden der selbstlenkenden Achse (11) gelieferte Bremsdruck ausschließlich mittels des gemeinsamen Bremsdruckmodulators (37) gesteuert wird, und wobei zwischen dem ersten Bremsdruckmodulator (22) und dem gemeinsamen Bremsdruckmodulator (37) sowie zwischen dem zweiten Bremsdruckmodulator (23) und dem gemeinsamen Bremsdruckmodulator (37) kein Flüssigkeitsfluß stattfindet.

2. Vorrichtung nach Anspruch 1, wobei das Bremssystem eine Steuereinheit (32) aufweist, die auf Signale von dem ersten und dem zweiten Geschwindigkeitssensor (30, 31) reagiert, um ein Steuersignal für den gemeinsamen Modulator (37) in Übereinstimmung mit einem vorbestimmten Steuerverfahren zu liefern.

3. Vorrichtung nach Anspruch 2, wobei das Steuersignal für den gemeinsamen Modulator (37) mittels der Steuereinheit dadurch erzeugt wird, daß das erste oder das zweite Rad als ein Steuerrad ausgewählt wird, und daß das Steuersignal in Abhängigkeit von der Drehgeschwindigkeit des Steuerrads erzeugt wird.

4. Vorrichtung nach Anspruch 3, wobei die Steuereinheit Rechenmittel und Mittel zum Beginnen einer Antiblockierverminderung eines Bremsdrucks aufweist, wobei die Rechenmittel Sequentialisierungsmittel zum Bestimmen und anfänglichen Auswählen des ersten oder des zweiten Rads als Steuerrad umfassen, um einer Anfangs-Blockierbedingung zu begegnen.

5. Vorrichtung nach Anspruch 4, wobei die Rechenmittel Vergleichsmittel zum Vergleichen der Beschleunigungen des ersten und des zweiten Rads während einer Radbeschleunigungsphase des oder aller Antiblockierzyklen umfaßt, die auf eine Anfangs-Antiblockierverminderung des Bremsdrucks folgen, wobei die Vergleichsmittel angeordnet sind, um das anfänglich ausgewählte Rad aufrecht zu erhalten oder um das andere Rad als das Steuerrad auszuwählen, wenn die Beschleunigungen eine Verbindung des ersten und des zweiten Rads mit Oberflächen ähnlicher Reibung anzeigen, und um das Rad, welches mit der Oberfläche mit der geringen Reibung in Verbindung steht, als das Steuerrad auszuwählen, wenn die Räder mit Oberflächen in Verbindung stehen, die unterschiedliche Reibungen aufweisen.

## Revendications

1. Système de freinage antiblocage pour une remorque comportant au moins deux essieux porteurs (11, 12, 13), au moins un essieu (11) comportant un moyen autodirecteur grâce auquel, lorsque la remorque suit un mouvement en courbe, les forces de réaction entre le sol et les roues portées par l'essieu provoquent un mouvement de pivotement des roues autour d'un axe de direction, ledit système comprenant une première roue (18), en une extrémité de l'essieu non directeur (12), munie d'un premier frein sensible à une pression de freinage, un premier modulateur (22) de pression de freinage pour fournir une pression de freinage audit premier frein et un premier capteur de vitesse (30) servant à déterminer la vitesse de rotation de ladite première roue (18) pour fournir un signal de commande destiné audit premier modulateur (22) de pression de freinage, une seconde roue (19) à l'extrémité opposée de l'essieu non directeur (12) munie d'un second frein sensible à une pression de freinage, un second modulateur (23) de pression de freinage pour fournir une pression de freinage audit second frein et un second capteur de vitesse (31) servant à déterminer la vitesse de rotation de la seconde roue (19) pour fournir un signal de commande destiné audit second modulateur (23) de pression de freinage, grâce à quoi est effectuée une modulation de ladite pression de freinage fournie aux freins desdites première et seconde roues aux extrémités opposées de l'essieu non directeur (12) et un frein pour les roues situées aux extrémités opposées de l'essieu autodirecteur (11), chacun desdits freins étant sensible à une pression de freinage par fluide caractérisé en ce qu'un modulateur commun (37) de pression de freinage est prévu pour fournir une pression de freinage auxdits freins desdites roues (14, 15) situées aux extrémités opposées dudit essieu autodirecteur (11), ledit modulateur pouvant fonctionner en réponse aux signaux fournis par les capteurs (30, 31) de vitesse de roue servant à déterminer la vitesse de rotation des roues situées aux extrémités opposées dudit essieu non directeur (12) de la remorque, la pression de freinage fournie auxdits freins desdites roues situées aux extrémités opposées dudit essieu autodirecteur (11) étant commandée uniquement par ledit modulateur commun (37) de pression de freinage, aucun écoulement de fluide n'étant présent entre ledit premier modulateur (22) de pression de freinage et ledit modulateur commun (37) de pression de freinage, ni entre ledit second modulateur (23) de pression de freinage et ledit modulateur commun (37) de pression de freinage.

2. Système selon la revendication 1 dans lequel le système de freinage comprend un module de commande (32) sensible à des signaux provenant desdits premier et second capteurs (30, 31) de vitesse pour générer un signal de commande destiné audit modulateur commun (37) selon une gestion de commande prédéterminée.

3. Système selon la revendication 2 dans lequel ledit signal de commande destiné au modulateur commun (37) est généré par ledit module de commande
a) en choisissant l'une desdites première et seconde roues comme roue de commande, et
b) en générant ledit signal de commande en fonction de la vitesse de rotation de ladite roue de commande.

4. Système selon la revendication 3 dans lequel le module de commande comprend un moyen de calcul et un moyen servant à démarrer la réduction antiblocage de la pression de freinage, ledit moyen de calcul comportant un moyen de classement servant à déterminer et à choisir initialement comme roue de commande la première desdites première et seconde roues à connaître une condition de glissement naissant.

5. Système selon la revendication 4 dans lequel ledit moyen de calcul comporte un moyen de comparaison pour comparer l'accélération desdites première et seconde roues au cours d'une phase d'accélération de roue du ou de chaque cycle antiblocage subséquent au démarrage de la réduction antiblocage de ladite pression de freinage et étant adapté pour maintenir ladite roue initialement choisie ou pour choisir l'autre roue comme roue de commande si lesdites accélérations indiquent la coopération des première et seconde roues avec des surfaces à frottements similaires et pour choisir la roue coopérant avec la surface à plus faible frottement comme roue de commande si les roues coopèrent avec des surfaces à frottement différent.
